# EUROPEAN PATENT SPECIFICATION

(11) **EP 4 000 381 B1**
(45) Date of publication and mention of the grant of the patent: **17.06.2026**
(21) Application number: 21205948.9
(22) Date of filing: 02.11.2021
(51) Int. Cl.: A01G 3/037

(54) **ELECTRIC SCISSORS**
ELEKTRISCHE SCHERE
CISEAUX ÉLECTRIQUES

(30) Priority: 11.11.2020 CN 202011252800
(43) Date of publication of application: 25.05.2022
(73) Proprietor: Techtronic Cordless GP, Anderson, SC 29621 (US)
(72) Inventor: SHU, Gong Meng, Dongguan City (CN); LI, Da Zheng, Dongguan City (CN)
(74) Representative: Zimmermann & Partner Patentanwälte mbB

(56) References cited:
- CN-U- 205 430 100
- JP-A- 2005 052 384
- JP-A- 2008 067 630
- JP-A- 2009 039 034
- TW-A- 201 031 320
- US-A1- 2013 055 575

## Description

### Technical Field

The present invention relates to electric scissors, and in particular, to a control unit for electric scissors and an operation mode of the electric scissors.

### Background Art

Electric scissors are a common electric garden tool, and can be used to prune tree branches. Such electric scissors include a movable blade and a fixed blade. The movable blade is rotatably connected to the fixed blade, and the movable blade is driven by an electric motor using a transmission mechanism, to move back and forth, thereby implementing a cutting action. During use, a user presses a trigger to cause the movable blade to move from an opened position to a closed position and cut an object between the movable blade and the fixed blade.

Because the blades of the electric scissors are in an opened state when not in use, there is a safety hazard in carrying or storage. In addition, after the electric scissors have been used for a long time, the blades of the electric scissors may be severely worn and cannot work normally.

Electric scissors according to the preamble of claim 1 are known from JP 2005 052384 A. Other known prior art documents referring to electric scissors are JP 2009 039034 A and JP 2008 067630 A.

### Summary of the Invention

In view of the above-mentioned defects in the prior art, an object of the present invention is to design electric scissors that are convenient to use, energy-saving, safe, and reliable.

To achieve this object, the present invention provides electric scissors comprising two blades, a driving unit, a control unit, and an input device. The control unit controls, in response to a power-off instruction input by a user using the input device, the driving unit to close the two blades relative to each other and then power off the electric scissors. In a normal working mode the control unit controls, in response to the user pressing the input device, the driving unit to close the two blades relative to each other at a first rate, and the control unit controls, in response to the user releasing the input device, the driving unit to open the two blades relative to each other. In the normal working mode, if the control unit does not detect, within a first predetermined time, that the user operates the input device, the electric scissors enter a sleep mode, and when the electric scissors have been in the sleep mode for a second predetermined time, the control unit closes the two blades relative to each other at a second rate and then powers off the electric scissors. The power-off instruction comprises pressing the input device and keeping the input device in a pressed state for a time required for power-off, and preferably, the time required for power-off is at least 2 seconds.

According to an embodiment of the present invention, the control unit activates, in response to a power-on instruction input by the user using the input device, the driving unit to open the two blades relative to each other, and preferably, in the process of opening the two blades relative to each other, the control unit controls the electric scissors to issue an audibly and/or visually perceptible prompt. The power-on instruction comprises pressing the input device and keeping the input device in a pressed state for a time required for power-on, and preferably, the time required for power-on is at least 2 seconds.

According to an embodiment of the present invention, after the control unit detects that the two blades move to a maximum opening angle relative to each other, the electric scissors enter a normal working mode, and in the normal working mode, the control unit controls, in response to the user pressing the input device, the driving unit to close the two blades relative to each other at a first rate, and the control unit controls, in response to the user releasing the input device, the driving unit to open the two blades relative to each other.

According to the claimed invention, in the normal working mode, if the control unit does not detect, within a first predetermined time, that the user operates the input device, the electric scissors enter a sleep mode, wherein preferably, the first predetermined time is at least 30 seconds, and preferably, when the electric scissors are about to enter the sleep mode, the control unit controls the electric scissors to issue an audibly and/or visually perceptible prompt.

According to an embodiment of the present invention, in the sleep mode, the control unit detects the input device at intervals, and the control unit restores, in response to a wake-up instruction input by the user using the input device, the electric scissors from the sleep mode to the normal working mode, wherein the wake-up instruction comprises at least one of the following: pressing a trigger, pressing the trigger and keeping the trigger in the pressed state for a time required to wake up, and quickly pressing and releasing the trigger at least twice.

According to the claimed invention, when the electric scissors have been in the sleep mode for a second predetermined time, the control unit closes the two blades relative to each other at a second rate and then powers off the electric scissors, wherein preferably, the second predetermined time is at least 100 seconds, the second rate is less than 50% of the first rate, and preferably, when the electric scissors are about to have been in the sleep mode for the second predetermined time, the control unit controls the electric scissors to issue an audibly and/or visually perceptible prompt. In embodiments, in the process of closing the two blades relative to each other at the second rate, once it is detected that any one of the two blades comes into contact with an object, the control unit moves the two blades to a maximum opening angle relative to each other.

According to an embodiment of the present invention, in the normal working mode, if the control unit detects that an exceptional event occurs, the control unit stops movement of the two blades relative to each other or moves the two blades to the maximum opening angle relative to each other. The control unit determines, on the basis of at least one of the following parameters, whether the exceptional event occurs: a load current, a change rate of the load current, a speed of a blade, an acceleration of the blade, a torque of the driving unit, and a change rate of the torque of the driving unit. If the parameter reaches a threshold for a third predetermined time, the control unit determines that the exceptional event has occurred, wherein for the same parameter, the larger the threshold, the shorter the third predetermined time.

According to an embodiment of the present invention, the two blades comprise a movable blade and a fixed blade, the driving unit drives the movable blade to move relative to the fixed blade to implement cutting, and the input device comprises a trigger. The electric scissors further comprise a counter configured to record the number of cuttings of the movable blade, and when the number of cuttings reaches a predetermined number, the control unit controls the electric scissors to issue an audibly and/or visually perceptible prompt.

According to an embodiment of the present invention, when it is detected that the movable blade moves, within a fourth predetermined time, from an opened position to a closed position and then returns to the opened position, and a working parameter of the electric scissors reaches a typical cutting value within the fourth predetermined time, the control unit determines that the electric scissors complete one effective cutting, and the working parameter comprises at least one of the load current, the change rate of the load current, a speed of the movable blade, an acceleration of the movable blade, the torque of the driving unit, and a change rate of the torque of the driving unit.

According to an embodiment of the present invention, the control unit resets the counter in response to a reset instruction input by the user using the input device. The reset instruction comprises pressing and releasing the trigger three or more consecutive times.

According to an embodiment of the present invention, the electric scissors comprise a status indicator, and the control unit sends a visually perceptible prompt to the user in at least one of the following manners: turning on the status indicator, turning off the status indicator, changing the color of the status indicator, and making the status indicator blink. Preferably, the status indicator is disposed on a side of a housing of the electric scissors facing the trigger.

According to an embodiment of the present invention, the electric scissors further comprise a lighting element, which is arranged on a side of the housing close to the two blades.

### Brief Description of the Drawings

Fig. 1 shows an internal structure of electric scissors according to an embodiment of the present invention.
Fig. 2 shows a transmission mechanism of electric scissors according to an embodiment of the present invention.
Fig. 3 shows a support of electric scissors according to an embodiment of the present invention.
Fig. 4 shows a sensor plate of electric scissors according to an embodiment of the present invention.
Fig. 5 shows electric scissors according to an embodiment of the present invention.

### Detailed Description of Embodiments

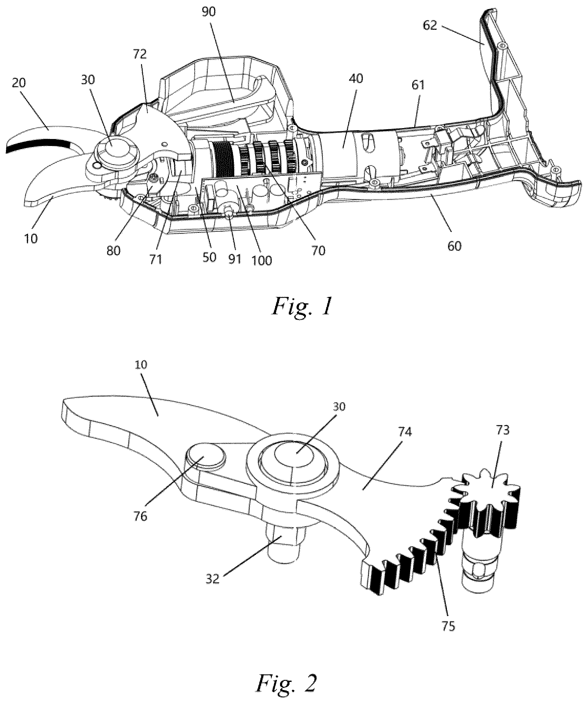

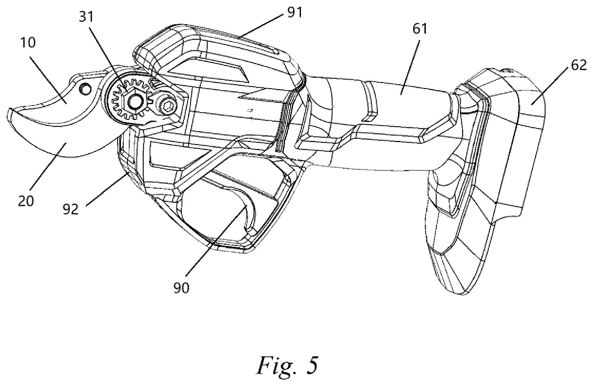

Fig. 1 shows electric scissors according to an embodiment of the present invention. The electric scissors comprise a housing 60 and blades 10 and 20 extending from the front end of the housing 60. Holes are formed on both the blades 10 and 20, a bolt 30 passes through the holes on the blades 10 and 20, and the blades 10 and 20 are fixed by tightening a nut 31 (shown in Fig. 5). In this embodiment, the lower blade 20 (that is, the blade closer to the nut 31) is a fixed blade, which keeps stationary during operation. The upper blade 10 is a movable blade, which rotates around the bolt 30 during operation so as to cooperate with the fixed blade 20 to implement cutting. In other embodiments, both the blades are movable blades, or the lower blade is a movable blade.

The housing 60 of the electric scissors accommodates a driving unit and a transmission assembly. In this embodiment, the driving unit is an electric motor 40. The electric motor 40 may be a brushless direct-current electric motor, a brushed direct-current electric motor, or an alternating-current electric motor. The transmission assembly includes a deceleration mechanism and a transmission mechanism. The deceleration mechanism is connected to an output shaft of the electric motor 40 and is configured to reduce a rotation speed and increase a torque. The transmission mechanism is connected to an output end of the deceleration mechanism and is configured to transmit power to the movable blade 10. The deceleration mechanism may be a planetary gear set 70 of at least one stage (a four-stage planetary gear set is shown in Fig. 1), or may be a gear set formed by the engagement of a plurality of gears of different sizes. The transmission assembly may be any mechanism, such as a gear mechanism, a linkage mechanism, and a lead screw nut mechanism, that can convert rotational movement of the output end of the deceleration mechanism into rotational movement of the movable blade.

In the embodiment shown in Fig. 1, the transmission mechanism comprises a bevel gear 71 and a fan-shaped oscillating gear 72. The bevel gear 71 is connected to an output end of the planetary gear set 70, and the fan-shaped oscillating gear 72 and the movable blade 10 are connected in such a way that the two cannot rotate relative to each other. A teeth portion (not visible in the figure) of the fan-shaped oscillating gear 72 is bevel teeth formed on the lower surface of the edge area thereof, and the bevel teeth engage with bevel teeth on the bevel gear 71.

Fig. 2 shows another embodiment of a transmission mechanism that comprises a spur gear 73 and a fan-shaped oscillating gear 74. A teeth portion of the fan-shaped oscillating gear 74 is straight teeth 75 formed on the outer edge thereof, and the straight teeth 75 engage with the straight teeth on the spur gear 73. A connection between the fan-shaped oscillating gear 74 and the movable blade 10 is implemented by a fastener 76.

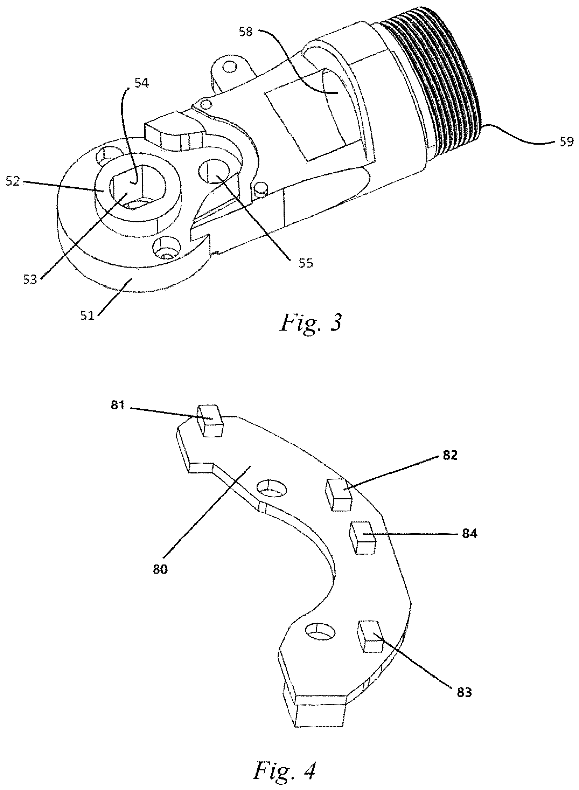

Referring back to Fig. 1, the housing 60 of the electric scissors is further provided with a support 50 for supporting the blades. A specific structure of the support 50 is shown in Fig. 3. A blade supporting portion 51 forms the front end of the support 50. The blade supporting portion 51 comprises a base and a boss 52 extending from the base. The fixed blade 20 is placed on the base around the boss 52. The blade supporting portion 51 has a through hole 53 which goes through the boss 52 and the base, for receiving the bolt 30. In this embodiment, a part of the blade supporting portion 51 defining the inner wall of the through hole 53 is a flat surface 54 that cooperates with a flat section 32 (shown in Fig. 2) on the bolt 30, so that the bolt 30 cannot rotate relative to the blade supporting portion 51. In addition, a fastener hole 55 is also formed on the blade supporting portion 51 and is aligned with a through hole at one end of the fixed blade 20, and the fastener passes through the fastener hole 55 and the through hole at one end of the fixed blade 20 to fasten the fixed blade 20 onto the blade supporting portion 51. The rear end of the support 50 has a threaded joint 59, which is fixedly connected to a housing of the deceleration mechanism (for example, a housing of a gear box). The support 50 further comprises a positioning opening 58 for positioning the bevel gear 71.

The housing 60 of the electric scissors forms a handle 61 for a user to hold, and the base of the handle forms a battery mounting portion 62. A battery attached to the battery mounting portion 62 supplies power to the electric motor 40 to drive the blade. The electric scissors further comprise an input device for the user to input an instruction. In the embodiment shown in Fig. 1, the input device comprises a trigger 90, and the user operates the electric scissors by pressing the trigger 90. A sensor plate 80 is disposed between the transmission assembly (for example, the bevel gear 71) and the blades 10 and 20, has sensors for detecting a position of the blade and a position of the trigger arranged thereon. The sensor plate 80 may be fastened onto the support 50. A control unit 100 of the electric scissors is disposed inside the housing 60, for example, disposed on the side of the deceleration mechanism or near the battery mounting portion 62.

The sensor on the sensor plate 80 may be a Hall sensor, which can measure a magnetic field generated by a magnet. In one embodiment, a magnet is provided on the movable blade 10 or the transmission mechanism (for example, the fan-shaped oscillating gear 72), and a magnet is provided on the trigger 90, and the control unit 100 determines, on the basis of signals sent by Hall sensors, whether the movable blade 10 and the trigger 90 have reached predetermined positions. A Hall sensor for detecting the position of the movable blade and a Hall sensor for detecting the position of the trigger may be arranged on the same sensor plate or on different sensor plates. It should be understood that the sensor in the present invention is not limited to the Hall sensor, and other types of sensors can also implement a position detection function, such as infrared sensors, optical sensors, and contact-type sensors.

The sensor plate 80 is shown in Fig. 4, on which Hall sensors 81, 82, and 83 are arranged. The Hall sensor 81 is close to the trigger 90, and determines, by sensing a magnetic field generated by the magnet on the trigger 90, whether the trigger 90 is pressed. The Hall sensors 82 and 83 sense a magnetic field generated by the magnet on the movable blade 10 or the transmission assembly (for example, the fan-shaped oscillating gear 72), to determine whether the movable blade 10 moves to an opened position or a closed position. The control unit 100 may obtain a precise position of the movable blade between the closed position and the opened position by analysing signals sent by the Hall sensors 82 and 83. Optionally, one or more additional Hall sensors 84 are provided between the two Hall sensors 82 and 83, and correspond to one or more intermediate opened positions of the movable blade. The control unit may limit the extreme opened position of the blade to the intermediate opened position on the basis of a signal from the Hall sensor 84, and this is particularly advantageous during pruning of thin tree branches.

Fig. 5 shows complete electric scissors. The electric scissors are provided with a status indicator 91, and the control unit 100 may issue a visually perceptible prompt to the user in at least one of the following manners: turning on the status indicator, turning off the status indicator, changing the color of the status indicator, and making the status indicator blink continuously or intermittently. The status indicator 91 may be an LED light, which is preferably located on a side of the housing 60 facing the trigger 90 to ensure that the user can notice the indication of the LED light when operating. The electric scissors may further comprise a sound device, such as a buzzer or a speaker, for issuing a prompt sound. Optionally, a lighting element 92 is provided on a side of the housing 60 close to the two blades 10 and 20, and is configured to illuminate an object to be pruned in a dim-light environment.

The operation of the electric scissors is described below by taking the electric scissors shown in Fig. 1 as an example.

### Preparations

Before using the electric scissors, the user needs to correctly mount a battery pack onto the battery mounting portion 62 at the rear of the handle. When the user assembles the battery pack, the control unit 100 may control the sound device and/or the status indicator 91 to issue an audibly and/or visually perceptible prompt to indicate to the user that the battery pack has been correctly mounted. For example, the sound device issues a signal sound, and at the same time, the status indicator 91 on the housing 60 blinks.

### Power-on operation

Before a pruning operation, the user needs to turn on the electric scissors. In order to prevent the electric scissors from being accidentally started due to shock, falling, etc., the user needs to use the trigger 90 to input a special power-on instruction. In one embodiment, the power-on instruction comprises pressing the trigger and keeping the trigger in a pressed state for a time required for power-on. Preferably, the time required for power-on is at least 2 seconds, and may be 3 seconds, 5 seconds, or longer. In another embodiment, the power-on instruction comprises quickly pressing and releasing the trigger at least twice within a period of time.

According to the present invention, generally, the two blades 10 and 20 of the electric scissors are in the closed state before a power-on operation, that is, the movable blade 10 is in the closed position. When the power-on instruction input by the user using the trigger 90 is detected, the control unit 100 may activate the electric motor 40 to move the movable blade 10 relative to the fixed blade 20 to the opened position. In this way, after the power-on operation is completed, the electric scissors are in a ready-to-prune state. In some cases (for example, a power supply of the electric scissors is suddenly cut off during the operation), the movable blade 10 may be in a partially opened position before the power-on. After the power-on instruction is detected, the control unit 100 also activates the electric motor 40 to move the movable blade 10 relative to the fixed blade 20 to the opened position.

In the process of opening the movable blade 10 relative to the fixed blade 20, the control unit may control the sound device to issue a power-on signal sound, and at the same time, turn on the LED indicator on the housing 60. The power-on signal sound may be two sounds with different pitches (low pitch first and then high pitch), two sounds with different durations (short first and then long), or any sound that can act as a prompt.

### Pruning operation

After the power-on operation is completed, the movable blade 10 is in the opened position, and at this time, the user can press the trigger 90 to control the movable blade 10 to prune. Specifically, when the sensor detects that the trigger 90 is pressed, the control unit 100 activates the electric motor 40 to close the movable blade 10 relative to the fixed blade 20. In one embodiment, only when it is detected that the trigger 90 has moved to a trigger position, for example, when the trigger reaches the midpoint or the end of its travel, the control unit drives the movable blade to move at a preset speed. In another embodiment, the control unit controls a moving speed and/or position of the movable blade on the basis of how much the trigger is pressed. This can be achieved by using a sensor to detect an instant position of the trigger. Therefore, when the user slowly presses the trigger, the control unit controls the movable blade to close slowly. When the user quickly presses the trigger, the control unit controls the movable blade to close quickly. The above two embodiments may also be combined, that is, after it is detected that the trigger 90 moves to the trigger position, the control unit 100 activates the electric motor 40 and controls the moving speed and/or position of the movable blade 10 on the basis of how much the trigger 90 is pressed.

For the sake of safety, regardless of whether the movable blade is in the closed position, once it is detected the trigger is released, the control unit immediately enables the movable blade to move in a reverse direction, that is, to move toward the opened position. This can be achieved by enabling the electric motor 40 to rotate in the reverse direction, switch a transmission path, etc. In an embodiment, during the reverse movement of the movable blade, if the sensor detects that the user presses the trigger again, the control unit drives the movable blade to move to the closed position in response to the operation of the user. In another embodiment, during the reverse movement of the movable blade, the control unit will not accept a new instruction input until the movable blade returns to the opened position. In other words, during the reverse movement of the movable blade, even if the user presses the trigger again, the movable blade will not be closed immediately, but will continue to be opened until the maximum travel is reached. In the embodiment in which the control unit controls the movement of the movable blade on the basis of how much the trigger is pressed, since the movement of the movable blade depends on the instant position of the trigger, the control unit can quickly respond to the pressing and release of the trigger, and drive the movable blade to immediately move in the direction of closing or opening.

### Sleep mode

Generally, if the user leaves the electric scissors unused for a long period of time, the user may set the electric scissors in a power-off state for the sake of safety and energy saving. However, during the pruning operation, the user is often looking for a pruning target, and therefore there is a period of time between two consecutive pruning actions of the electric scissors. In order to save power, a sleep mode is provided for the electric scissors. When the electric scissors are in a normal working mode, if the control unit does not detect an input instruction of the user within a first predetermined time, the control unit sets the electric scissors in the sleep mode. The first predetermined time may be at least 30 seconds, such as 60 seconds, 90 seconds, or 120 seconds, or may be freely set by the user. When the electric scissors are about to enter the sleep mode, the control unit may control the sound device and/or the status indicator to issue an audibly and/or visually perceptible prompt to the user, for example, issue a short high prompt sound, and at the same time, turn off the indicator or change its color.

When the electric scissors are in the sleep mode, the control unit may selectively cut off the power supply to some elements in the electric scissors, such as a control module for controlling the rotation of the electric motor 40. In one embodiment, when the electric scissors are in the sleep mode, the control unit controls the sensor on the sensor plate 80 to perform detection at intervals of a long period of time (interval time), and the detection only lasts for a short period of time (duration). For example, the sensor performs detection of 10 milliseconds every 248 milliseconds. If the sensor does not detect, within 10 milliseconds, that the trigger is pressed, the sensor waits 248 milliseconds and then detects again. Since the sensor does not perform detection most of the time, the power consumption of the electric scissors in sleep mode is significantly reduced. It should be understood that the interval time and duration of the detection of the sensor may be determined as required, or may be freely set by the user. For example, the interval time may be 3 seconds, 2 seconds, 1 second, or 500 milliseconds, and the duration may be 100 milliseconds, 50 milliseconds, or 20 milliseconds.

Because the condition for entering the sleep mode is that the control unit does not detect a user input within the first predetermined time, the movable blade of the electric scissors is in the opened position in the sleep mode. After the sleep mode is entered, if the user wants to continue using the electric scissors, the user needs to input a wake-up instruction to restore the electric scissors to the normal working mode. The wake-up instruction may be at least one of the following: pressing the trigger, pressing the trigger and keeping the trigger in the pressed state for time required to wake up, and quickly pressing and releasing the trigger at least twice within a period of time. The wake-up instruction and the power-on instruction may be the same or different.

In this embodiment, the wake-up instruction restores the electric scissors to the normal working mode, but does not directly trigger the movement of the movable blade. After the electric scissors are restored to the normal working mode, the control unit may control the sound device and/or the status indicator to issue an audibly and/or visually perceptible prompt to the user, for example, issue a short high prompt sound, and at the same time, turn on the indicator or change its color.

Optionally, when the electric scissors are in the sleep mode for a second predetermined time, the control unit automatically activates the electric motor 40 to close the movable blade and then power off the electric scissors. In order to prevent a safety accident when the movable blade is automatically closed, the movable blade may be closed at a second rate different from a normal cutting rate. The second rate may be set to be less than 50% of the normal cutting rate, for example, set to 30%, 20%, or 10% of the normal cutting rate. The second predetermined time may be set to at least 100 seconds, for example, set to 300 seconds or 600 seconds, or may be freely selected by the user. When the electric scissors are about to have been in the sleep mode for the second predetermined time and during the automatic closing of the movable blade, the control unit may control the sound device and/or the status indicator to issue an audibly and/or visually perceptible prompt to the user, for example, issue continuous alarm sounds, and at the same time, make the indicator blink continuously. During the automatic closing of the movable blade, once it is detected that the blade comes into contact with an object, the control unit immediately moves the movable blade in the reverse direction to the opened position.

### Power-off operation

In order to prevent the blade from hurting people or damaging objects, it is ideal to ensure that the blades of the electric scissors are in the closed state when not in use. To this end, the control unit of the electric scissors according to the present invention can control, in response to a power-off instruction input by the user, the electric motor 40 to enable the two blades to be closed relative to each other and then power off the electric scissors.

Considering that during the pruning operation, the user presses the trigger to enable the movable blade to move to the closed position to implement cutting, to simplify the operation, the power-off instruction may be designed as pressing the trigger and keeping the trigger in the pressed state for the time required for power-off. The time required for power-off may be set to 2 seconds or more, such as 3 seconds, 5 seconds, and 10 seconds, or may be freely set by the user. When the power-off instruction is detected, the control unit may control the sound device and/or the status indicator to issue an audibly and/or visually perceptible prompt to the user, for example, issue a power-off signal sound, and at the same time, turn off the status indicator. The power-off signal sound may be two sounds with different pitches (high pitch first and then low pitch), two sounds with different durations (long first and then short), or any sound that can act as a prompt.

### Anti-blocking operation

When the electric scissors are used to prune thick or hard tree branches, an exceptional event may occur, for example, the blade is stuck by the branches and cannot continue cutting. When the control unit detects such an exceptional event, the control unit may control the movable blade to perform an anti-blocking operation, and at the same time, control the sound device and/or the status indicator to issue an audibly and/or visually perceptible prompt to the user, for example, issue an alarm sound, and at the same time, make the status indicator blink continuously.

The occurrence of the exceptional event may be determined separately or jointly in a plurality of different manners. For example, when one or more of the following conditions are met, it may be considered that an exceptional event has occurred: a load current exceeding a threshold, a change rate of the load current exceeding a threshold, a speed of the movable blade being lower than a threshold, an acceleration of the movable blade exceeding a threshold, a torque of the electric motor 40 exceeding a threshold, and a change rate of the torque of the electric motor 40 exceeding a threshold. In another embodiment, when one or more of the above conditions are met for a specific period of time, it is considered that an exceptional event has occurred. The load current is taken as an example. The higher the threshold, the shorter the duration required to determine an exceptional event. For example, when the load current reaches 12 A for 500 milliseconds, or when the load current reaches 14 A for 300 milliseconds, or when the load current reaches 16 A for 200 milliseconds, it is considered that an exceptional event has occurred.

In one embodiment, the control unit automatically triggers the anti-blocking operation once an exceptional event is detected. The anti-blocking operation comprises enabling the movable blade to move toward the opened position. It is conceivable that when the blade is stuck by branches, more power is required to pull out the movable blade, and therefore, the control unit can appropriately increase the torque of the electric motor 40 during the anti-blocking operation.

In another embodiment, once an exceptional event is detected, the control unit stops the movement of the movable blade and keeps the stuck state. The user needs to additionally input an anti-blocking instruction to trigger the anti-blocking operation. The control unit may stop the driving of the movable blade by the electric motor 40 by cutting off the power supply, or may stop the movement of the blade in other manners, for example, cutting off a transmission path between the electric motor 40 and the blade. A dedicated anti-blocking button may be provided on the electric scissors to help the user to input an anti-blocking instruction. Compared with automatically triggering the anti-blocking operation, one of the advantages of manually inputting the anti-blocking instruction is that it can help the user understand the pruning capacity limit of the electric scissors, so that the user can continuously modify the operation mode on the basis of experience to avoid the occurrence of blocking. In addition, when an exceptional event occurs, in addition to inputting an anti-blocking instruction to trigger an anti-blocking operation, the user can also choose to directly perform manual intervention, for example, removing branches between the blades by hand. This is advantageous in many cases, because in the case where the blade is stuck in thick branches to cause blocking, even if the movable blade is moved in the reverse direction, the blocking cannot be removed.

### Blade replacement operation

The blades of electric scissors will become blunt or worn after long-time use, resulting in reduced cutting efficiency, and they need to be replaced with new blades. A counter may be set in the electric scissors to record the number of cuttings of the blade. After the blades complete a specific number of cuttings, the electric scissors prompt the user to replace the blades with new blades. The control unit may determine, according to the movement of the movable blade, whether a cutting is completed. For example, within a predetermined period of time (for example, 3 seconds, 2 seconds, and 1 second), the sensor detects that the movable blade moves from the opened position to the closed position and then returns to the opened position. However, the above determination manner cannot be used to identify whether the movable blade is cutting an object during the movement. Because the blade is subject to the resistance from the object when cutting, some working parameters of the electric scissors may change during cutting. The working parameters include a working current, a change rate of the working current, the speed of the movable blade, the acceleration of the movable blade, the torque of the electric motor 40, the change rate of the torque of the electric motor 40, etc. In order to avoid incorrect counting, the control unit can compare one or more working parameters with a typical non-cutting value or a typical cutting value when determining whether the blade has completed a cutting.

When the number of cuttings recorded by the counter reaches a predetermined number of cuttings, the control unit controls the sound device and/or the status indicator to issue an audibly and/or visually perceptible prompt to the user, for example, change the color of the status indicator, or make the status indicator blink once at intervals. Blades of different shapes and materials have different predetermined numbers of cuttings. The predetermined number of cuttings may be set by the control unit, or may be set by the user independently. For example, the predetermined number of cuttings may be 200, 300, 500, or 1000.

After the user completes the replacement of the new blades, the counter needs to be reset. A reset instruction may be input by the user independently. In order to avoid misoperation, it is preferable to design the reset instruction to be completely different from a conventional operation instruction. In one embodiment, the user needs to press and release the trigger three or more consecutive times, for example, five times or seven times. Optionally, in order to help the control unit to distinguish between a normal cutting instruction and a reset instruction, when inputting the reset instruction, the user needs to release the trigger within a short time after pressing the trigger, for example, within 0.3 seconds. After the reset instruction input by the user is received, the control unit resets the counter, and at the same time, controls the sound device and/or the status indicator to issue an audibly and/or visually perceptible prompt to the user, for example, change the color of the status indicator, or make the status indicator blink.

All the operation instructions described above may be input using the same trigger, so that there is no need to provide a plurality of input devices for the electric scissors. In other embodiments, a power-on button, a power-off button, a wake-up button, or a reset button can be provided on the housing 60, so that the user can select a corresponding operation. In addition to the sound device and the status indicator, a vibration unit may be provided in the handle of the electric scissors to provide a tactile feedback for the user, or a display capable of displaying various operation information and data may be provided on the housing 60.

Although the present invention has been described in detail with only limited embodiments, it should be understood that the present invention is not limited to these disclosed embodiments. The invention is defined in the appended claims.

## Claims

1. Electric scissors, comprising a housing (60), two blades (10, 20), a driving unit (40), a control unit (100), and an input device, the two blades (10, 20) comprise a movable blade (10) and a fixed blade (20), the driving unit (40) drives the movable blade (10) to move relative to the fixed blade (20) to implement cutting, and the input device comprises a trigger (90), wherein the control unit (100) controls, in response to a power-off instruction input by a user using the input device, the driving unit (40) to close the two blades (10, 20) relative to each other and then power off the electric scissors and wherein in a normal working mode the control unit (100) controls, in response to the user pressing the input device, the driving unit (40) to close the two blades (10, 20) relative to each other at a first rate, and the control unit (100) controls, in response to the user releasing the input device, the driving unit (40) to open the two blades (10, 20) relative to each other, **characterized in that** in the normal working mode, if the control unit (100) does not detect, within a first predetermined time, that the user operates the input device, the electric scissors enter a sleep mode, and when the electric scissors have been in the sleep mode for a second predetermined time, the control unit (100) closes the two blades (10, 20) relative to each other at a second rate and then powers off the electric scissors.

2. The electric scissors according to claim 1, **characterized in that** the power-off instruction comprises pressing the input device and keeping the input device in a pressed state for a time required for power-off, and preferably, the time required for power-off is at least 2 seconds.

3. The electric scissors according to claim 1, **characterized in that** the control unit (100) activates, in response to a power-on instruction input by the user using the input device, the driving unit (40) to open the two blades (10, 20) relative to each other, and preferably, in the process of opening the two blades (10, 20) relative to each other, the control unit (100) controls the electric scissors to issue an audibly and/or visually perceptible prompt.

4. The electric scissors according to claim 3, **characterized in that** the power-on instruction comprises pressing the input device and keeping the input device in a pressed state for a time required for power-on, and preferably, the time required for power-on is at least 2 seconds.

5. The electric scissors according to claim 3, **characterized in that** after the control unit (100) detects that the two blades (10, 20) move to a maximum opening angle relative to each other, the electric scissors enter the normal working mode.

6. The electric scissors according to claim 5, **characterized in that** the first predetermined time is at least 30 seconds, and preferably, when the electric scissors are about to enter the sleep mode, the control unit (100) controls the electric scissors to issue an audibly and/or visually perceptible prompt.

7. The electric scissors according to claim 6, **characterized in that** in the sleep mode, the control unit (100) detects the input device at intervals, and the control unit (100) restores, in response to a wake-up instruction input by the user using the input device, the electric scissors from the sleep mode to the normal working mode, wherein the wake-up instruction comprises at least one of the following: pressing a trigger (90), pressing the trigger (90) and keeping the trigger (90) in the pressed state for a time required to wake up, and quickly pressing and releasing the trigger (90) at least twice.

8. The electric scissors according to claim 6, **characterized in that** the second predetermined time is at least 100 seconds, the second rate is less than 50% of the first rate, and preferably, when the electric scissors are about to have been in the sleep mode for the second predetermined time, the control unit (100) controls the electric scissors to issue an audibly and/or visually perceptible prompt.

9. The electric scissors according to claim 8, **characterized in that** in the process of closing the two blades (10, 20) relative to each other at the second rate, once it is detected that any one of the two blades (10, 20) comes into contact with an object, the control unit (100) moves the two blades (10, 20) to a maximum opening angle relative to each other.

10. The electric scissors according to claim 5, **characterized in that** in the normal working mode, if the control unit (100) detects that an exceptional event occurs, the control unit (100) stops movement of the two blades (10, 20) relative to each other or moves the two blades (10, 20) to the maximum opening angle relative to each other.

11. The electric scissors according to claim 10, **characterized in that** the control unit (100) determines, on the basis of at least one of the following parameters, whether the exceptional event occurs: a load current, a change rate of the load current, a speed of a blade (10, 20), an acceleration of the blade (10, 20), a torque of the driving unit (40), and a change rate of the torque of the driving unit (40).

12. The electric scissors according to claim 11, **characterized in that** if the parameter reaches a threshold for a third predetermined time, the control unit (100) determines that the exceptional event has occurred, wherein for the same parameter, the larger the threshold, the shorter the third predetermined time.

13. The electric scissors according to claim 1, **characterized by** further comprising a counter configured to record the number of cuttings of the movable blade (10), and when the number of cuttings reaches a predetermined number, the control unit (100) controls the electric scissors to issue an audibly and/or visually perceptible prompt.

14. The electric scissors according to claim 13, **characterized in that** when it is detected that the movable blade (10) moves, within a fourth predetermined time, from an opened position to a closed position and then returns to the opened position, and a working parameter of the electric scissors reaches a typical cutting value within the fourth predetermined time, the control unit (100) determines that the electric scissors complete one effective cutting, and the working parameter comprises at least one of the load current, the change rate of the load current, a speed of the movable blade (10), an acceleration of the movable blade (10), the torque of the driving unit (40), and a change rate of the torque of the driving unit (40).

15. The electric scissors according to claim 13, **characterized in that** the control unit (100) resets the counter in response to a reset instruction input by the user using the input device, optionally the reset instruction comprises pressing and releasing the trigger (90) three or more consecutive times.

## Patentansprüche

1. Elektrische Schere, umfassend ein Gehäuse (60), zwei Klingen (10, 20), eine Antriebseinheit (40), eine Steuereinheit (100) und eine Eingabevorrichtung, wobei die beiden Klingen (10, 20) eine bewegliche Klinge (10) und eine feststehende Klinge (20) umfassen, wobei die Antriebseinheit (40) die bewegliche Klinge (10) zu einer Bewegung relativ zur feststehenden Klinge (20) antreibt, um einen Schneidevorgang auszuführen, und wobei die Eingabevorrichtung einen Auslöser (90) umfasst, wobei die Steuereinheit (100) in Reaktion auf einen durch den Benutzer mittels der Eingabevorrichtung eingegebenen Ausschaltbefehl die Antriebseinheit (40) ansteuert, um die beiden Klingen (10, 20) relativ zueinander zu schließen und dann die elektrische Schere auszuschalten, und wobei in einem normalen Betriebsmodus die Steuereinheit (100) in Reaktion auf ein Niederdrücken der Eingabevorrichtung durch den Benutzer die Antriebseinheit (40) ansteuert, um die beiden Klingen (10, 20) relativ zueinander mit einer ersten Geschwindigkeit zu schließen, und wobei die Steuereinheit (100) in Reaktion auf ein Loslassen der Eingabevorrichtung durch den Benutzer die Antriebseinheit (40) ansteuert, um die beiden Klingen (10, 20) relativ zueinander zu öffnen,
**dadurch gekennzeichnet, dass** im normalen Betriebsmodus dann, wenn die Steuereinheit (100) innerhalb einer vorgegebenen ersten Zeitspanne keine Betätigung der Eingabevorrichtung durch den Benutzer feststellt, die elektrische Schere in einen Ruhemodus übergeht, und wobei dann, wenn die elektrische Schere für eine vorgegebene zweite Zeitspanne im Ruhemodus war, die Steuereinheit (100) die beiden Klingen (10, 20) relativ zueinander mit einer zweiten Geschwindigkeit schließt und dann die elektrische Schere ausschaltet.

2. Elektrische Schere nach Anspruch 1,
dadurch gezeichnet, dass der Ausschaltbefehl das Niederdrücken der Eingabevorrichtung und das Halten der Eingabevorrichtung in einem niedergedrückten Zustand für eine zum Ausschalten erforderliche Zeit umfasst, wobei die zum Ausschalten erforderliche Zeit vorzugsweise mindestens 2 Sekunden beträgt.

3. Elektrische Schere nach Anspruch 1,
**dadurch gekennzeichnet, dass** die Steuereinheit (100) in Reaktion auf einen durch den Benutzer mittels der Eingabevorrichtung eingegebenen Einschaltbefehl die Antriebseinheit (40) aktiviert, um die beiden Klingen (10, 20) relativ zueinander zu öffnen, und vorzugsweise während des Öffnens der beiden Klingen (10, 20) relativ zueinander die Steuereinheit (100) die elektrische Schere ansteuert, um einen akustisch und/oder visuell wahrnehmbaren Hinweis auszugeben.

4. Elektrische Schere nach Anspruch 3,
**dadurch gekennzeichnet, dass** der Einschaltbefehl das Niederdrücken der Eingabevorrichtung und das Halten der Eingabevorrichtung in dem niedergedrücktem Zustand für eine zum Einschalten erforderliche Zeit umfasst, wobei die zum Einschalten erforderliche Zeit vorzugsweise mindestens 2 Sekunden beträgt.

5. Elektrische Schere nach Anspruch 3,
**dadurch gekennzeichnet, dass** die elektrische Schere in den normalen Betriebsmodus übergeht, nachdem die Steuereinheit (100) festgestellt hat, dass die beiden Klingen (10, 20) einen maximalen Öffnungswinkel zueinander erreicht haben.

6. Elektrische Schere nach Anspruch 5,
**dadurch gekennzeichnet, dass** die vorgegebene erste Zeitspanne mindestens 30 Sekunden beträgt und die Steuereinheit (100) die elektrische Schere ansteuert, um einen akustisch und/oder visuell wahrnehmbaren Hinweis auszugeben, wenn die elektrische Schere im Begriff ist, in den Ruhemodus überzugehen.

7. Elektrische Schere nach Anspruch 6,
**dadurch gekennzeichnet, dass** die Steuereinheit (100) im Ruhemodus die Eingabevorrichtung intervallweise detektiert und die Steuereinheit (100) in Reaktion auf einen durch den Benutzer mittels der Eingabevorrichtung eingegebenen Weckbefehl die elektrische Schere aus dem Ruhemodus in den normalen Betriebsmodus zurückführt, wobei der Weckbefehl mindestens eine der folgenden Aktionen umfasst: Niederdrücken eines Auslösers (90), Niederdrücken des Auslösers (90) und Halten des Auslösers (90) in dem niedergedrückten Zustand für eine zum Wecken erforderliche Zeit, und mindestens zweimaliges schnelles Niederdrücken und Loslassen des Auslösers (90).

8. Elektrische Schere nach Anspruch 6,
**dadurch gekennzeichnet, dass** die zweite vorgegebene Zeit mindestens 100 Sekunden beträgt, die zweite Geschwindigkeit weniger als 50 % der ersten Geschwindigkeit beträgt und vorzugsweise die Steuereinheit (100) die elektrische Schere ansteuert, um einen akustisch und/oder visuell wahrnehmbaren Hinweis auszugeben, wenn die elektrische Schere sich für die vorgegebene zweite Zeitspanne im Ruhemodus befunden hat.

9. Elektrische Schere nach Anspruch 8,
**dadurch gekennzeichnet, dass** beim Schließen der beiden Klingen (10, 20) relativ zueinander mit der zweiten Geschwindigkeit, sobald festgestellt worden ist, dass eine der beiden Klingen (10, 20) mit einem Objekt in Kontakt gelangt, die Steuereinheit (100) die beiden Klingen (10, 20) auf einen maximalen Öffnungswinkel relativ zueinander bewegt.

10. Elektrische Schere nach Anspruch 5,
**dadurch gekennzeichnet, dass** im normalen Betriebsmodus dann, wenn die Steuereinheit (100) ein eintretendes Ausnahmeereignis feststellt, die Steuereinheit (100) die Bewegung der beiden Klingen (10, 20) relativ zueinander stoppt oder die beiden Klingen (10, 20) auf den maximalen Öffnungswinkel relativ zueinander bewegt.

11. Elektrische Schere nach Anspruch 10,
**dadurch gekennzeichnet, dass** die Steuereinheit (100) anhand mindestens eines der folgenden Parameter ermittelt, ob das Ausnahmeereignis eintritt: Laststrom, Änderung des Laststroms, Geschwindigkeit der Klinge (10, 20), Beschleunigung der Klinge (10, 20), Drehmoment der Antriebseinheit (40) und Änderung des Drehmoments der Antriebseinheit (40).

12. Elektrische Schere nach Anspruch 11,
**dadurch gekennzeichnet, dass** die Steuereinheit (100) das Eintreten des Ausnahmeereignisses feststellt, wenn der Parameter für eine vorgegebene dritte Zeitspanne einen Schwellenwert erreicht, wobei für denselben Parameter gilt: Je größer der Schwellenwert, desto kürzer die vorgegebene dritte Zeitspanne.

13. Elektrische Schere nach Anspruch 1,
**dadurch gekennzeichnet, dass** sie ferner einen Zähler zur Erfassung der Anzahl von Schnittvorgängen der beweglichen Klinge (10) aufweist und die Steuereinheit (100) die elektrische Schere ansteuert, um einen akustisch und/oder visuell wahrnehmbaren Hinweis auszugeben, wenn die Anzahl von Schnittvorgängen eine vorgegebene Zahl erreicht.

14. Elektrische Schere nach Anspruch 13,
**dadurch gekennzeichnet, dass** dann, wenn festgestellt wird, dass sich die bewegliche Klinge (10) innerhalb einer vorgegebenen vierten Zeitspanne von einer geöffneten Position in eine geschlossene Position und anschließend wieder in die geöffnete Position bewegt und ein Betriebsparameter der elektrischen Schere innerhalb der vorgegebenen vierten Zeitspanne einen typischen Schnittwert erreicht, die Steuereinheit (100) feststellt, dass die elektrische Schere einen effektiven Schnittvorgang ausgeführt hat, wobei der Betriebsparameter mindestens einen der folgenden Parameter umfasst: Laststrom, Änderung des Laststroms, Geschwindigkeit der beweglichen Klinge (10), Beschleunigung der beweglichen Klinge (10), Drehmoment der Antriebseinheit (40) und Änderung des Drehmoments der Antriebseinheit (40).

15. Elektrische Schere nach Anspruch 13,
**dadurch gekennzeichnet, dass** die Steuereinheit (100) in Reaktion auf einen durch den Benutzer mittels der Eingabevorrichtung eingegebenen Rücksetzbefehl den Zähler zurücksetzt, wobei optional der Rücksetzbefehl das dreimalige oder mehrmalige aufeinanderfolgende Niederdrücken und Loslassen des Auslösers (90) umfasst.

## Revendications

1. Ciseaux électriques, comprenant un boîtier (60), deux lames (10, 20), une unité d'entraînement (40), une unité de commande (100) et un dispositif d'entrée, dans lesquels
les deux lames (10, 20) comprennent une lame mobile (10) et une lame fixe (20), l'unité d'entraînement (40) entraîne la lame mobile (10) pour qu'elle se déplace par rapport à la lame fixe (20) afin d'effectuer une coupe, et le dispositif d'entrée comprend une gâchette (90),
en réponse à une instruction de mise hors tension entrée par un utilisateur à l'aide du dispositif d'entrée, l'unité de commande (100) commande l'unité d'entraînement (40) pour fermer les deux lames (10, 20) l'une par rapport à l'autre, puis mettre hors tension les ciseaux électriques, et
en mode de fonctionnement normal, en réponse à l'actionnement du dispositif d'entrée par l'utilisateur, l'unité de commande (100) commande l'unité d'entraînement (40) pour fermer les deux lames (10, 20) l'une par rapport à l'autre à une première vitesse, et, en réponse au relâchement du dispositif d'entrée par l'utilisateur, l'unité de commande (100) commande l'unité d'entraînement (40) pour ouvrir les deux lames (10, 20) l'une par rapport à l'autre,
**caractérisés en ce que**, en mode de fonctionnement normal, si l'unité de commande (100) ne détecte pas d'actionnement du dispositif d'entrée par l'utilisateur dans un premier intervalle de temps prédéterminé, les ciseaux électriques passent en mode veille, et lorsque les ciseaux électriques sont restés en mode veille pendant un deuxième intervalle de temps prédéterminé, l'unité de commande (100) ferme les deux lames (10, 20) l'une par rapport à l'autre à une deuxième vitesse, puis met les ciseaux électriques hors tension.

2. Ciseaux électriques selon la revendication 1,
**caractérisés en ce que** l'instruction de mise hors tension consiste à appuyer sur le dispositif d'entrée et à maintenir le dispositif d'entrée dans un état actionné pendant le temps nécessaire à la mise hors tension, et de préférence, le temps nécessaire à la mise hors tension est d'au moins 2 secondes.

3. Ciseaux électriques selon la revendication 1,
**caractérisés en ce que**, en réponse à une instruction de mise sous tension entrée par l'utilisateur à l'aide du dispositif d'entrée, l'unité de commande (100) vient activer l'unité d'entraînement (40) pour ouvrir les deux lames (10, 20) l'une par rapport à l'autre, et de préférence, au cours du processus d'ouverture des deux lames (10, 20) l'une par rapport à l'autre, l'unité de commande (100) commande les ciseaux électriques pour qu'ils émettent un avertissement perceptible de manière auditive et/ou visuelle.

4. Ciseaux électriques selon la revendication 3,
**caractérisés en ce que** l'instruction de mise sous tension consiste à appuyer sur le dispositif d'entrée et à maintenir le dispositif d'entrée dans un état actionné pendant un temps nécessaire à la mise sous tension, et, de préférence, le temps nécessaire à la mise sous tension est d'au moins 2 secondes.

5. Ciseaux électriques selon la revendication 3,
**caractérisés en ce qu'**après que l'unité de commande (100) a détecté que les deux lames (10, 20) se sont déplacées jusqu'à un angle d'ouverture maximal l'une par rapport à l'autre, les ciseaux électriques passent en mode de fonctionnement normal.

6. Ciseaux électriques selon la revendication 5,
**caractérisés en ce que** le premier intervalle de temps prédéterminé est d'au moins 30 secondes, et, de préférence, lorsque les ciseaux électriques sont sur le point de passer en mode veille, l'unité de commande (100) commande les ciseaux électriques pour qu'ils émettent un avertissement perceptible de manière auditive et/ou visuelle.

7. Ciseaux électriques selon la revendication 6,
**caractérisés en ce que**, en mode veille, l'unité de commande (100) détecte le dispositif d'entrée à intervalles réguliers, et, en réponse à une instruction de réveil entrée par l'utilisateur à l'aide du dispositif d'entrée, l'unité de commande (100) fait passer les ciseaux électriques du mode veille au mode de fonctionnement normal, l'instruction de réveil comprenant au moins l'une des actions suivantes : appuyer sur une gâchette (90), appuyer sur la gâchette (90) et maintenir la gâchette (90) à l'état actionné pendant un temps nécessaire au réveil, et appuyer sur la gâchette (90) et la relâcher rapidement au moins deux fois.

8. Ciseaux électriques selon la revendication 6,
**caractérisés en ce que** le deuxième intervalle de temps prédéterminé est d'au moins 100 secondes, la deuxième vitesse est inférieure à 50 % de la première vitesse, et, de préférence, lorsque les ciseaux électriques sont restés en mode veille pendant le deuxième intervalle de temps prédéterminé, l'unité de commande (100) commande les ciseaux électriques pour qu'ils émettent un avertissement perceptible de manière auditive et/ou visuelle.

9. Ciseaux électriques selon la revendication 8,
**caractérisés en ce que**, lors du processus de fermeture des deux lames (10, 20) l'une par rapport à l'autre à la deuxième vitesse, dès qu'il est détecté que l'une des deux lames (10, 20) entre en contact avec un objet, l'unité de commande (100) déplace les deux lames (10, 20) jusqu'à un angle d'ouverture maximal l'une par rapport à l'autre.

10. Ciseaux électriques selon la revendication 5,
**caractérisés en ce que**, en mode de fonctionnement normal, si l'unité de commande (100) détecte qu'un événement exceptionnel se produit, l'unité de commande (100) arrête le mouvement des deux lames (10, 20) l'une par rapport à l'autre ou déplace les deux lames (10, 20) jusqu'à l'angle d'ouverture maximal l'une par rapport à l'autre.

11. Ciseaux électriques selon la revendication 10,
**caractérisés en ce que** l'unité de commande (100) détermine, sur la base d'au moins l'un des paramètres suivants, si l'événement exceptionnel se produit : un courant de charge, une variation du courant de charge, une vitesse d'une lame (10, 20), une accélération de la lame (10, 20), un couple de l'unité d'entraînement (40), et une variation du couple de l'unité d'entraînement (40).

12. Ciseaux électriques selon la revendication 11,
**caractérisés en ce que**, si le paramètre atteint un seuil pendant un troisième intervalle de temps prédéterminé, l'unité de commande (100) détermine que l'événement exceptionnel s'est produit, sachant que, pour un même paramètre, plus le seuil est élevé, plus le troisième intervalle de temps prédéterminé est court.

13. Ciseaux électriques selon la revendication 1,
**caractérisés en ce qu'**ils comprennent en outre un compteur configuré pour enregistrer le nombre de coupes effectuées par la lame mobile (10), et lorsque le nombre de coupes atteint un nombre prédéterminé, l'unité de commande (100) commande les ciseaux électriques pour qu'ils émettent un avertissement perceptible de manière auditive et/ou visuelle.

14. Ciseaux électriques selon la revendication 13,
**caractérisés en ce que**, lorsqu'il est détecté que la lame mobile (10) se déplace, dans un quatrième intervalle de temps prédéterminé, d'une position ouverte à une position fermée puis revient à la position ouverte, et qu'un paramètre de fonctionnement des ciseaux électriques atteint une valeur de coupe typique dans le quatrième intervalle de temps prédéterminé, l'unité de commande (100) détermine que les ciseaux électriques effectuent une coupe effective, et le paramètre de fonctionnement comprend au moins l'un parmi le courant de charge, la variation du courant de charge, une vitesse de la lame mobile (10), une accélération de la lame mobile (10), le couple de l'unité d'entraînement (40) et une variation du couple de l'unité d'entraînement (40).

15. Ciseaux électriques selon la revendication 13,
**caractérisés en ce que** l'unité de commande (100) réinitialise le compteur en réponse à une instruction de réinitialisation entrée par l'utilisateur à l'aide du dispositif d'entrée, et, en option, l'instruction de réinitialisation comprend le fait d'appuyer sur la gâchette (90) et de la relâcher trois fois ou plus de manière consécutive.
